# EUROPEAN PATENT APPLICATION

(11) **EP 1 626 564 A1**
(43) Date of publication of application: **15.02.2006**
(21) Application number: 05254947.4
(22) Date of filing: 09.08.2005
(51) Int. Cl.: H04M 15/00, G06Q 10/00

(54) **Supplementary access code as bonus for using a calling card**

(30) Priority: 12.08.2004 GB 0418021
(71) Applicant: Cheers International Telecom Ltd, London W6 0LH (GB)
(72) Inventor: Samaratne, Miles, London W6 0LH (GB)
(74) Representative: Slingsby, Philip Roy

(57) **Abstract**

A method for communicating access information for a call provision unit to a user of a first communications device, the method comprising the steps of connecting the call provision unit to the first communications device when an access code associated with that call provision unit is entered into the first communications device, establishing a connection between the first communications device and a second communications device via the call provision unit when a destination code associated with the second communications device is entered into the first communications device, identifying that the duration of the connection between the first communications device and the second communications device has exceeded a predetermined time and following that identification communicating access information for a call provision unit comprising an access code associated with that call provision unit to the user over the connection between the call provision unit and the first communications device.

## Description

This invention relates to a method for communicating access information to a user during a telephone call. In particular, this invention relates to communicating information to a user that allows them to access reduced rate telephone calls.

The cost of making a telephone call typically depends on the length of the call, the distance between the initiating and receiving parties and the time of day at which the call is made. Usually, the charging rate is mainly determined by the distance between the initiating and receiving parties. The call may be categorised according to e.g. whether it is a local call, a national call or an international call. International calls are typically subdivided into different countries, so that e.g. the telecommunications operator may charge more for a call made from the UK to China than one made from the UK to the USA. The charging rate may further depend on the time of day, e.g. with a different charging rate being imposed for a call made during peak times when demand is at its highest (usually during business hours) than the same call made during off-peak hours (for example, during the evening).

Charging for telephone calls may be implemented in different ways. For example, a user of a fixed line or mobile phone may be sent a bill every month. Alternatively, users may pre-pay for telephone calls, thereby creating a credit balance they can use to make calls. Additional payments are required to make calls after their credit runs out. Telephone calls may also be made from public call boxes by paying upfront via either cash or credit card.

As a marketing tool, telecommunications operators may wish to provide discounts or other promotional offers to their customers. Typically, customers are informed of such promotional offers through marketing literature, such as leaflets etc, which may be included with their telephone bill. However, customers tend to throw away such information without reading it. Telephone operators also target customers directly by phone. However customers frequently find such calls an intrusion and annoyance. Customers may be provided charged according to a regime that best suits their usage of the services provided by the operator. For example, the operator may offer unlimited local calls for free in return for the customer paying an increased fixed rate charge every month. Another option is for a customer to be charged a reduced rate after a certain charge has been incurred. For example, mobile phone operators provide reduced rates as a "reward" for a customer having made phone calls of a predetermined duration in one day. Such charging arrangements are usually specified in a contract signed by the customer, which requires the customer to have some idea of the likely duration of calls they will make during a day. Furthermore, the customer then has to keep track of the duration of phone calls made during a particular day to know when the cheaper' rate will be introduced. This is inconvenient and impractical. It is therefore difficult to make promotional information available to the customer at an appropriate time.

There is therefore a need for a method whereby charging information can be delivered to a user at an appropriate time and to the appropriate user.

According to an aspect of the present invention, there is provided a method for communicating access information for a call provision unit to a user of a first communications device, the method comprising the steps of connecting the call provision unit to the first communications device when an access code associated with that call provision unit is entered into the first communications device, establishing a connection between the first communications device and a second communications device via the call provision unit when a destination code associated with the second communications device is entered into the first communications device, identifying that the duration of the connection between the first communications device and the second communications device has exceeded a predetermined time and following that identification communicating access information for a call provision unit comprising an access code associated with that call provision unit to the user over the connection between the call provision unit and the first communications device.

Preferably, the access information communicated to the user comprises a security code. The method may further comprise the steps of entering a security code into the first communications device when the device is connected to the call provision unit, checking that the security code is valid and establishing the connection between the first communications device and the second communications device if the security code is found to be valid.

Preferably a list of valid security codes is stored at the call provision unit. The step of checking may comprise searching the list of valid security codes for the security code entered into the first communication device and treating the security code entered into the first communications device as valid if it is contained in the list of valid security codes. A security code communicated as access information to a user may be entered to the list of valid security codes and stored as part of that list.

A security code may be stored as part of the list of valid security codes for a predetermined time after the security code is communicated to the user as access information, and may be deleted from the list of valid security codes after the expiry of that predetermined time. A security code may be deleted from the list of valid security codes after the code is entered into the first communications device and found to be valid.

The method may further comprise the steps of entering a security code into the first communications device when the device is connected to the call provision unit and establishing the connection between the first communications device and the second communications device irrespective of whether or not the entered security code is a valid security code. The method may also comprise storing a list of valid security codes at the call provision unit, wherein the code is a valid code if it is contained in the list of valid security codes.

The step of identifying may be triggered by a entering predetermined code into the first communications device.

Preferably, the method comprises determining the charging rate for the connection between the first communications device and the second communications device in dependence on the access code and/or PIN number entered into the first communications device and charging the user for the connection between the first communications device and the second communications device in accordance with that charging rate. Preferably, the method comprises charging the connection between the first communications device and the second communications device at a first charging rate, and charging a connection between the first communication device and the second communication device that is established by entering the access information communicated to the user into the first communications device at a second charging rate, wherein the second charging rate is lower than the first charging rate.

The connection between the first communications device and the second communications device may be terminated immediately after the identification. Alternatively, the connection between the first communications device and the second communications device may be continued following the identification.

Preferably, the steps of establishing, communicating and checking are performed by the call provision unit.

The present invention will now be described by way of example, with reference to the accompanying drawings, in which:
Figure 1 shows a telecommunications system suitable for implementing the present invention;
Figure 2 shows the steps involved in implementing the present invention;
Figure 3 shows the instructions that may be printed on a phonecard in accordance with the present invention.

The present invention relates to telephone services that can be accessed by dialling an "access" phone number. By dialling the access number, a user is connected to a call provision unit associated with a service provider. The user is then invited to enter a destination number for a call. The call provision unit connects the user to that destination number. Usually, the service provider charges a lower charging rate for the call to the destination number than would be charged by a normal telephone operator. If the call lasts for a predetermined length of time, the service provider may interrupt the call to provide the user with a different access number, which the user can use to access the service provider and make calls at a lower rate than the rate charged for the initial call.

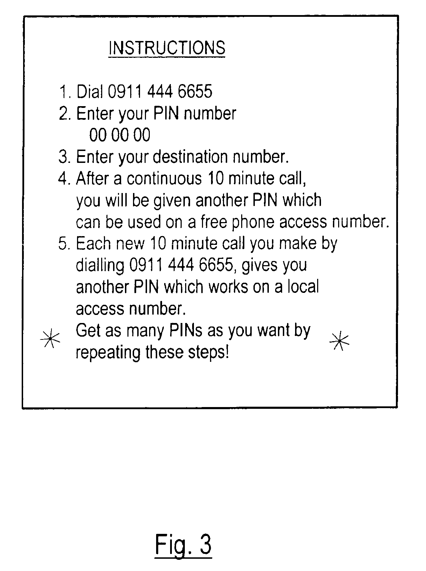

For example, the service provider may issue phonecards. These typically have printed on them a list of calling charges for destinations worldwide and an access number, which a customer dials to initiate a call at the charge specified. An example of the instructions that may be printed on a phonecard is shown in figure 3. Typically, the access number is charged at a premium rate. The customer, having accessed the call provision unit via the access number, may be required to enter a PIN number before being prompted to enter the destination phone number. The PIN number may be printed on the card, may be chosen by the user specifically for their account with the card issuer or may have been provided by the call provision unit in during a previous call made by the user.

Phonecards may be provided to customers by the card issuer either free of charge, or for payment. If the card is free, then the cost of any calls made via the access number printed on the card is usually charged on the telephone bill of the phone with which the calls were made. If a call is made using a public payphone, then payment for the call must be made at the phone as normal e.g. using cash or credit cards. If the customer pays for the phonecard, then that payment may create a credit balance that the customer can use to make calls. Alternatively, paying for the phonecard may simply entitle the customer to make calls at a cheaper rate than that charged for calls accessed using the access number and PIN number of a phonecard that is free.

The card issuer typically has some kind of arrangement with a telecommunications operator whereby the card issuer makes a "bulk purchase" of discounted call time using the telecommunications operator's infrastructure. The card issuer then effectively sells this call time to customers by connecting calls to a destination number via the premium rate access number.

Although the present invention is described principally in relation to phonecards, it should be understood this is for the purposes of example only. Phonecards are just one commonly used and convenient method of informing customers of the services available by dialling the access number.

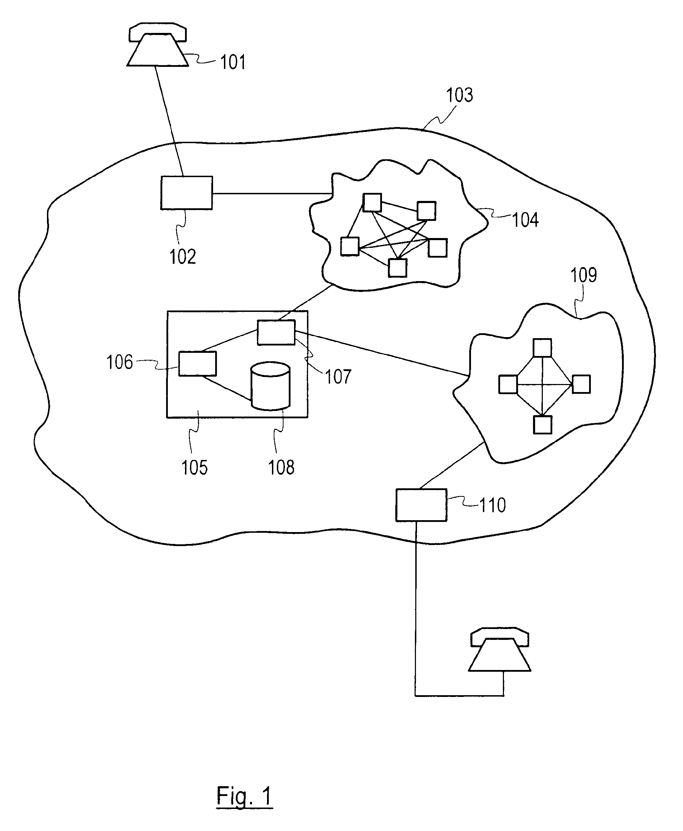

A suitable telecommunications system for implementing this kind of arrangement is illustrated in figure 1. Figure 1 illustrates an initiating telephone 101. When the user dials the access number for the call provision unit 105, the call is connected to the local exchange 102 where a connection is made to a network 104. The call is routed via a series of switches in the network 104 to the call provision unit 105. The user then enters the destination number and the call provision unit routes the call to the local exchange 110 of the destination telephone via the network 109.

Networks 104 and 105 are shown as different networks for the purposes of example only. The networks may be wireless or wired, and could be e.g. a conventional telephone network or the internet.

The call provision unit 105 typically comprises a controller 106, a router 107 and a database 108. In figure 1 these functional units have been illustrated as separate components. However, this is for the purposes of example only and the functions could be performed by a single piece of apparatus. The router connects the call provision unit to at least one communications network and the database stores information such as access and PIN numbers. The controller controls the operation of the call provision unit. For example, the controller prompts the user to enter the PIN and destination numbers for the call and checks the database to check whether or not the PIN is valid for the access number which the user dialled. The controller also initiates the timer at the start of the call, interrupts the call after a predetermined time has elapsed and provides the user with new access and PIN numbers.

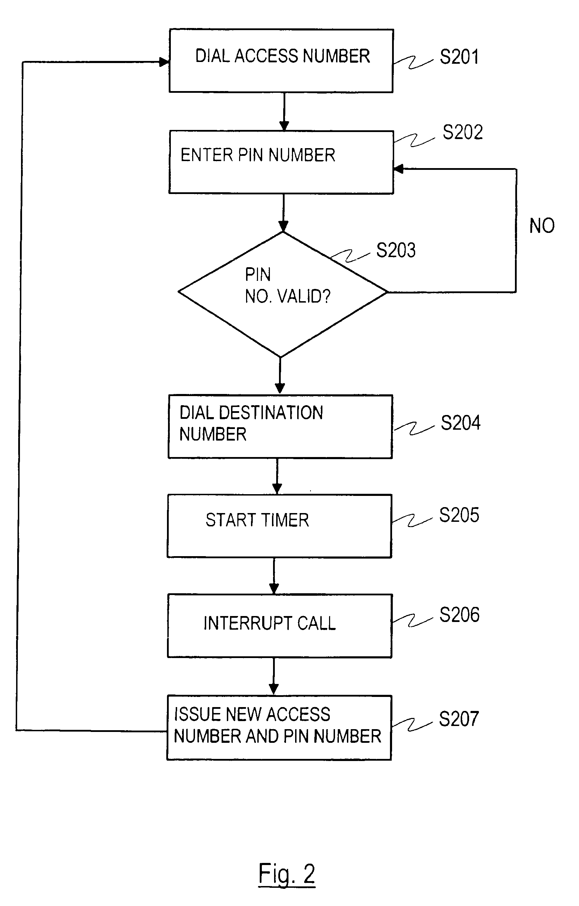

A suitable method for informing a user of charging information is illustrated in figure 2. According to this implementation, the user dials a premium rate access number, which is printed on their phonecard in step S201. As described above, the call is connected to the call provision unit. The user then hears a voice prompting them to enter a PIN number. Alternatively, the phonecard may contain instructions to the user to enter the PIN number without a voice prompt, for instance immediately after the premium rate number is dialled or when a particular tone is heard through the telephone. The user enters the PIN number at step S202. The server of the card issuer checks the PIN number at step S203.

The PIN number might identify a particular account (i.e. an account associated with a particular user), a particular phonecard or a particular type of service that can be accessed using a phonecard. For example, different phonecards can be sold that provide different services/charging rates but which provide access to those services/charging rates via the same access phone number. This enables the card issuer to provide a wide variety of products to their customers without having to obtain a different access number from the telecommunications operator for each product on the market. The PIN number entered by the user can also be a factor in determining the charging rate that is to be applied to a call. For example, PIN numbers associated with phonecards for which payment is required are likely to correspond to lower charging rates than PIN numbers associated with phonecards that are free of charge. Also, some phonecards may be directed at a particular market, for example, calls to a particular country or region of the world may be available at a particularly discounted rate.

The step of checking the PIN number at step S203 in figure 2 will therefore involve checking the database of PIN numbers, to verify that the PIN number that has been entered is valid for the access phone number that was dialled. If the PIN number is invalid, then the user may be asked to re-enter the PIN number. If the user fails to enter a valid PIN number the call may be terminated by the server of the card issuer. PIN numbers could, for example, be valid only for a predetermined length of time, e.g. every phonecard could expire by default after 360 days. The expiry period could run from the date when the type of phonecard is first marketed, from the date when a particular card is first issued to a customer or from the date when the first phone call is made using the access number printed on the phonecard.

If the PIN number is associated with a particular card, it may be used to access records of the calls etc made previously using that card. This is advantageous as it allows the card user to target a customer specifically. For example, the server may store details of previous calls made using the account identified by the PIN number, in order to offer the user appropriate incentives or provide them with the benefits (e.g. cheaper calls) that they have "earned" through making calls having a predetermined length or costing a predetermined amount previously. Requiring the user to enter a PIN number can also be advantageous in verifying that the user making the call is authorised to do so. For example, in a situation where the user has a pre-paid account with the card issuer, e.g. where they paid for their card, it may be preferable for the user to have to enter a PIN number in order that unauthorised persons cannot access the credit on their account.

If the PIN number is not authorised, then the call may be terminated. Alternatively, the user may be invited to re-enter the PIN number. The user may be limited to entering the PIN number a predetermined number of times before the call is terminated or the number of times the user may re-enter the PIN may be unlimited.

If the call has been made to a number such that a charge will be made to the initiator of the call (for instance if the number is a premium rate or national rate number or any number other than a freephone/toll-free number) then the system can permit an onward call to be made to a destination number even if no PIN number has been entered. The operator of the system could derive sufficient revenue from the charge made to the initiator of the call to support the cost of the onward call. In that situation if the user has not entered a correct PIN number after a certain number of attempts, or if the user fails to enter a PIN number at all, the user may be still be able to make the onward call. In such a situation the user could alternatively not be required to enter a PIN at all.

If the PIN number is authorised by the call provision unit in step S203, or if the system authorises the user to proceed without having entered a valid PIN, in the situations described above, then the user is invited to enter the destination number in step S204. The call is then connected to a network via the routing unit and routed to its destination. A further option is that the system could not require the user to enter any PIN number at all at this point.

When the call is connected, a timer is started (step S205). When the call has been in duration for a predetermined length of time (e.g. 10 minutes), the call provision unit interrupts the call (step S206). The interruption usually involves the call to the destination number being terminated, so that the user is only connected to the call provision unit. Alternatively, the interruption to the call may be initiated by the user dialling a predetermined code (e.g. *7). By dialling the predetermined code, the call to the destination number is preferably terminated as before. The call provision unit could signal audibly to the user when the interruption can be initiated. If the code is dialled, the call provision unit checks that the call has lasted the predetermined length of time. If the duration of the call equalled or exceeded that length of time then the call to the destination number is terminated, leaving the user connected to the call provision unit. The user then hears an announcement (step S207) providing a new PIN number and optionally a new access number. While the announcement is being played any digits dialled by the user are preferably ineffective i.e. so that the user cannot affect the call provision unit during this time.

After the announcement has been made the call to the call provision unit is also terminated. The user can then dial the new access number (or the previous access number if no new access number is provided) and enter the new PIN number to place calls at a cheaper rate than previously. The new access number will preferably access the same call provision unit. Therefore, in figure 2, the process returns to step S201 with the access number being dialled. Alternatively, the user may have the option to continue with their existing call at the lower charging rate.

Preferably the call provision unit has access to a list of PIN numbers that it may allocate to users. When a PIN is allocated to a user during a call interruption, the PIN number is added to a list of allocated PIN numbers and deleted from the list of numbers that are available to be allocated. When the user dials the access number for the call provision unit and enters a PIN number, the call provision unit checks the list of PIN numbers that have been allocated and are therefore valid. The call provision unit may have different lists of allocated, valid PIN numbers for each access number that may be dialled to connect to the call provision unit.

Each PIN number may only be valid for a single call. Therefore, when a user places a call and enters their allocated PIN number, that PIN number is removed from the allocated, valid list of PIN numbers and reinstated on the list of PIN numbers that are available to be allocated to users. Similarly, a PIN number may remain valid for a predetermined number of calls, and removed from the allocated, valid list after it has been used the predetermined number of times. The new PIN number may also be active for only a short period of time, such as an hour, to encourage users to take advantage of the lower rate calls immediately. This method of allocating PIN numbers means that the call provision unit can re-use PIN numbers, as only a limited number will be allocated and therefore valid at any one time.

The duration of the call that can be made using the new PIN number may be limited e.g. so the user might be offered a ten minute call at the lower rate. The duration of the call would be monitored by the call provision unit and the call would be terminated after having lasted for that predetermined duration.

The new access numbers may typically be freephone, local or national rate numbers, or any number which is charged at less than premium rate. Therefore, after the user has been connected via the premium rate number for a predetermined length of time he or she is then able to place calls, such as international calls, using a number that is charged at a much lower rate. As before, the PIN number may be a factor in determining the charging rate to be applied for a call.

In a similar embodiment to that described above, the user may be offered the option of reconnecting to the previous destination, with the remainder of the call being charged at the lower rate. This means that call to the call provision unit is not terminated, and the user can reconnect to the original destination number without having to re-initiate the call using an access number and PIN number.

The user may make a call via the original access number and obtain a new PIN and access number an unlimited number of times.

The applicant hereby discloses in isolation each individual feature described herein and any combination of two or more such features, to the extent that such features or combinations are capable of being carried out based on the present specification as a whole in light of the common general knowledge of a person skilled in the art, irrespective of whether such features or combinations of features solve any problems disclosed herein, and without limitation to the scope of the claims. The applicant indicates that aspects of the present invention may consist of any such feature or combination of features. In view of the foregoing description it will be evident to a person skilled in the art that various modifications may be made within the scope of the invention.

## Claims

1. A method for communicating access information for a call provision unit to a user of a first communications device, the method comprising the steps of:
connecting the call provision unit to the first communications device when an access code associated with that call provision unit is entered into the first communications device;
establishing a connection between the first communications device and a second communications device via the call provision unit when a destination code associated with the second communications device is entered into the first communications device;
identifying that the duration of the connection between the first communications device and the second communications device has exceeded a predetermined time; and following that identification
communicating access information for a call provision unit comprising an access code associated with that call provision unit to the user over the connection between the call provision unit and the first communications device.

2. A method as claimed in claim 1, wherein the access information communicated to the user comprises a security code.

3. A method as claimed in claims 1 or 2, the method further comprising the steps of:
entering a security code into the first communications device when the device is connected to the call provision unit;
checking that the security code is valid; and
establishing the connection between the first communications device and the second communications device if the security code is found to be valid.

4. A method as claimed in claims 2 or 3, comprising storing a list of valid security codes at the call provision unit and wherein the step of checking comprises:
searching the list of valid security codes for the security code entered into the first communication device; and
treating the security code entered into the first communications device as valid if it is contained in the list of valid security codes.

5. A method as claimed in any of claims 2 to 4, comprising entering a security code that is communicated as access information to a user to the list of valid security codes and storing the security code as part of that list.

6. A method as claimed in any of claims 2 to 5, comprising storing a security code as part of the list of valid security codes for a predetermined time after the security code is communicated to the user as access information, and deleting the security code from the list of valid security codes after the expiry of that predetermined time.

7. A method as claimed in any of claims 2 to 6, comprising storing a security code as part of the list of valid security codes after the security code is communicated to the user as access information, and deleting the security code from the list of valid security codes after the code is entered into the first communications device and found to be valid.

8. A method as claimed in claims 1 or 2, further comprising the steps of:
entering a security code into the first communications device when the device is connected to the call provision unit; and
establishing the connection between the first communications device and the second communications device irrespective of whether or not the entered security code is a valid security code.

9. A method as claimed in claim 8, comprising storing a list of valid security codes at the call provision unit and wherein the code is a valid code if it is contained in the list of valid security codes.

10. A method as claimed in any preceding claim, comprising triggering the step of identifying by a entering predetermined code into the first communications device.

11. A method as claimed in any preceding claim, comprising determining the charging rate for the connection between the first communications device and the second communications device in dependence on the access code and/or PIN number entered into the first communications device and charging the user for the connection between the first communications device and the second communications device in accordance with that charging rate.

12. A method as claimed in claim 11, comprising charging the connection between the first communications device and the second communications device at a first charging rate, and charging a connection between the first communication device and the second communication device that is established by entering the access information communicated to the user into the first communications device at a second charging rate, wherein the second charging rate is lower than the first charging rate.

13. A method as claimed in any preceding claim, comprising terminating the connection between the first communications device and the second communications device immediately after the identification.

14. A method as claimed in any of claims 1 to 12, comprising continuing the connection between the first communications device and the second communications device following the identification.

15. A method as claimed in any preceding claim, wherein the step of establishing is performed by the call provision unit.

16. A method as claimed in any preceding claim, wherein the step of communicating is performed by the call provision unit.

17. A method as claimed in any preceding claim, wherein the step of checking is performed by the call provision unit.

18. A method substantially as herein described with reference to the accompanying drawings.
